# EUROPEAN PATENT APPLICATION

(11) **EP 4 734 409 A1**
(43) Date of publication of application: **29.04.2026**
(21) Application number: 23942729.7
(22) Date of filing: 26.06.2023
(51) Int. Cl.: H04L 1/00

(54) **METHOD AND APPARATUS FOR DETERMINING UPLINK TRANSMISSION BEHAVIOR, AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Dehns Germany Partnerschaft mbB
(86) International application number: PCT/CN2023/102512
(87) International publication number: WO 2025/000201

(57) **Abstract**

The present disclosure provides a method and apparatus for determining an uplink transmission behavior, and a storage medium. The method comprises: in response to determining that a first time domain resource occupied by a synchronization signal block (SSB) conflicts with a second time domain resource occupied by uplink transmission of a terminal on an uplink subband, determining an uplink transmission behavior on the basis of a predefined rule or received indication signaling, wherein the uplink subband is located within a downlink time unit or a flexible time unit in a time domain. The present disclosure can solve the problem of an SSB sent by a network device and the uplink transmission of the terminal on the uplink subband conflicting in the time domain, thus making a terminal behavior clear, and improving the availability and reliability of full-duplex communications.

## Description

### TECHNICAL FIELD

The present disclosure relates to the field of communications, and in particular, to methods and apparatuses for determining an uplink transmission behavior, and storage media.

### BACKGROUND

In Release-18 (Rel-18) Full Duplex Enhancement projects, research will be conducted on full-duplex solutions. Specifically, network devices will be capable of simultaneously receiving and transmitting data within a single time unit.

### SUMMARY

To avoid time-domain conflicts between SSBs sent by a network device and uplink transmissions of a terminal on an uplink subband, embodiments of the present disclosure provide methods and apparatuses for determining an uplink transmission behavior, and storage media.

According to a first aspect of the embodiments of the present disclosure, a method for determining an uplink transmission behavior is provided, including:
in response to determining that a first time-domain resource occupied by a synchronization signal/physical broadcast channel block (SSB) conflicts with a second time-domain resource occupied by an uplink transmission of a terminal on an uplink subband, determining an uplink transmission behavior based on a predefined rule or a received indication signaling, where the uplink subband is located in a downlink time unit or a flexible time unit in time domain.

According to a second aspect of the embodiments of the present disclosure, a method for determining an uplink transmission behavior is provided, including:
in response to determining that a first time-domain resource occupied by a synchronization signal/physical broadcast channel block (SSB) conflicts with a second time-domain resource occupied by an uplink transmission of a terminal on an uplink subband, determining an uplink transmission behavior of the terminal based on a predefined rule or an indication signaling sent to the terminal, where the uplink subband is located in a downlink time unit or a flexible time unit in time domain.

According to a third aspect of the embodiments of the present disclosure, a terminal is provided, including:
a processing module, configured to, in response to determining that a first time-domain resource occupied by a synchronization signal/physical broadcast channel block (SSB) conflicts with a second time-domain resource occupied by an uplink transmission of a terminal on an uplink subband, determine an uplink transmission behavior based on a predefined rule or a received indication signaling, where the uplink subband is located in a downlink time unit or a flexible time unit in time domain.

According to a fourth aspect of the embodiments of the present disclosure, a network device is provided, including:
a processing module, configured to, in response to determining that a first time-domain resource occupied by a synchronization signal/physical broadcast channel block (SSB) conflicts with a second time-domain resource occupied by an uplink transmission of a terminal on an uplink subband, determine an uplink transmission behavior of the terminal based on a predefined rule or an indication signaling sent to the terminal, where the uplink subband is located in a downlink time unit or a flexible time unit in time domain.

According to a fifth aspect of the embodiments of the present disclosure, a terminal is provided, including:
one or more processors;
where the terminal is configured to execute the method for determining the uplink transmission behavior according to any one of the terminal-side aspects.

According to a sixth aspect of the embodiments of the present disclosure, a network device is provided, including:
one or more processors;
where the network device is configured to execute the method for determining the uplink transmission behavior according to any one of the network-device-side aspects.

According to a seventh aspect of the embodiments of the present disclosure, a communication system is provided, including a terminal and a network device, where the terminal is configured to implement the method for determining the uplink transmission behavior according to any one of the terminal-side aspects, and the network device is configured to implement the method for determining the uplink transmission behavior according to any one of the network-device-side aspects.

According to an eighth aspect of the embodiments of the present disclosure, a storage medium is provided, the storage medium storing instructions which, when executed on a communication device, cause the communication device to execute the method for determining the uplink transmission behavior according to any one of the terminal-side or network-device-side aspects.

The embodiments of the present disclosure can resolve the issue of time-domain conflict between the SSB sent by the network device and the uplink transmission of the terminal on the uplink subband, clarify the terminal behavior, and improve the availability and reliability of full-duplex communication.

It should be understood that the above general description and the following detailed descriptions are exemplary and explanatory only and do not limit the present disclosure.

### BRIEF DESCRIPTION OF DRAWINGS

The accompanying drawings, which are incorporated in and constitute a part of the specification, illustrate embodiments consistent with the present disclosure, and are used together with the specification to explain the principles of the present disclosure.
FIG. 1 is an exemplary schematic diagram of an architecture of a communication system according to an embodiment of the present disclosure.
FIG. 2A is an exemplary interaction schematic diagram of a method for determining an uplink transmission behavior according to an embodiment of the present disclosure.
FIG. 2B is an exemplary schematic diagram of an SBFD slot according to an embodiment of the present disclosure.
FIGS. 2C to 2E are exemplary schematic diagrams illustrating conflicts in time-domain resources between an SSB and an uplink subband according to an embodiment of the present disclosure.
FIG. 3A is an exemplary interaction schematic diagram of a method for determining an uplink transmission behavior according to an embodiment of the present disclosure.
FIG. 3B is an exemplary interaction schematic diagram of a method for determining an uplink transmission behavior according to an embodiment of the present disclosure.
FIG. 4A is an exemplary interaction schematic diagram of a method for determining an uplink transmission behavior according to an embodiment of the present disclosure.
FIG. 4B is an exemplary interaction schematic diagram of a method for determining an uplink transmission behavior according to an embodiment of the present disclosure.
FIG. 5A is an exemplary interaction schematic diagram of an apparatus for determining an uplink transmission behavior according to an embodiment of the present disclosure.
FIG. 5B is an exemplary interaction schematic diagram of an apparatus for determining an uplink transmission behavior according to an embodiment of the present disclosure.
FIG. 6A is an exemplary interaction diagram of a communication device according to an embodiment of the present disclosure.
FIG. 6B is an exemplary interaction diagram of a chip according to an embodiment of the present disclosure.

### DETAILED DESCRIPTION

Reference will now be made in detail to exemplary embodiments, examples of which are illustrated in the accompanying drawings. When the following description refers to the accompanying drawings, unless otherwise indicated, the same numbers in different accompanying drawings indicate the same or similar elements. Implementations described in the following exemplary embodiments do not represent all implementations consistent with the present disclosure. Rather, they are merely examples of apparatuses and methods consistent with some aspects of the present disclosure as detailed in the appended claims.

Terms used in the present disclosure are only for a purpose of describing specific embodiments, and are not limiting the present disclosure. Singular forms of "a," said," and "the" used in the present disclosure and in the claims are also intended to include majority forms, unless the context clearly indicates otherwise. It should also be understood that the term "and/or" as used herein refers to any or all of the possible combinations containing at least one of the listed items in association.

It should be understood that although terms first, second, third, etc. may be used to describe various messages in the present disclosure, these messages should not be limited to these terms. These terms are only used to distinguish messages of the same type from each other. For example, without departing from the scope of the present disclosure, the first message may also be named as a second message, and similarly, the second message may be named as a first message. Depending on the context, the word "if" as used herein can be interpreted as "at" or "when" or "in response to determining".

Embodiments of the present disclosure provide methods and apparatuses for determining an uplink transmission behavior, and storage media.

In a first aspect, an embodiment of the present disclosure provides a method for determining an uplink transmission behavior, including:
in response to determining that a first time-domain resource occupied by a synchronization signal/physical broadcast channel block (SSB) conflicts with a second time-domain resource occupied by an uplink transmission of a terminal on an uplink subband, determining an uplink transmission behavior based on a predefined rule or a received indication signaling, where the uplink subband is located in a downlink time unit or a flexible time unit in time domain.

In the above embodiment, the issue of time-domain conflict between the SSB sent by the network device and the uplink transmission of the terminal on the uplink subband is resolved, the terminal behavior is clarified, and the availability and reliability of full-duplex communication are improved.

In combination with some embodiments of the first aspect, in some embodiments, determining the uplink transmission behavior based on the received indication signaling includes:
determining, based on received downlink control information (DCI), to perform the uplink transmission on the uplink subband.

In the above embodiments, the purpose of enabling the terminal to resolve time-domain conflicts between an SSB and an uplink transmission of the terminal on an uplink subband based on received indication signaling is achieved.

In combination with some embodiments of the first aspect, in some embodiments, determining, based on the received downlink control information (DCI), to perform the uplink transmission on the uplink subband includes:
in response to a repetition of transmission via a physical uplink channel is enabled, determining, based on the DCI, to perform a first number of repetitions of the transmission via the physical uplink channel on the uplink subband, where the first number is less than a total number of repetitions.

In the above embodiment, the terminal can perform the first number of repetitions of the transmission via the physical uplink channel on the uplink subband based on indication signaling sent by the network device, with the first number being less than the total number of repetitions, thereby enabling the terminal to have an opportunity to receive SSBs transmitted by the network device and ensuring synchronization between the terminal and the network device.

In combination with some embodiments of the first aspect, in some embodiments, the method further includes:
determining, based on the predefined rule or a received new indication signaling, a new uplink transmission behavior, where the new uplink transmission behavior includes whether to perform a second number of repetitions of the transmission via the physical uplink channel on the uplink subband, and the second number is equal to a difference between the total number and the first number.

In the above embodiment, the terminal can determine whether to perform the second number of repetitions of the transmission via the physical uplink channel on the uplink subband based on the predefined rule or the new indication signaling, clarifying terminal behavior and providing high availability.

In combination with some embodiments of the first aspect, in some embodiments, the indication signaling indicates any one of:
whether a time unit where the SSB is located is allowed to be used for performing the uplink transmission; or
whether each SSB occasion included in an SSB burst set is allowed to be used for performing the uplink transmission.

In the above embodiment, the indication signaling sent by the network device can be used to indicate whether the time unit where the SSB is located is allowed to be used for performing the uplink transmission, or whether each SSB occasion in the SSB burst set is allowed to be used for performing the uplink transmission, ensuring consistent understanding of terminal uplink transmission behavior between the terminal and the network device, with high availability.

In combination with some embodiments of the first aspect, in some embodiments, determining the uplink transmission behavior based on the received indication signaling includes any one of:
performing, based on the indication signaling, the uplink transmission on the uplink subband in a first time unit, where the first time unit is a time unit where the SSB is located and is allowed to be used for performing the uplink transmission; or
performing, based on the indication signaling, the uplink transmission on the uplink subband in a first SSB occasion, where the first SSB occasion is an SSB occasion that is allowed to be used for performing the uplink transmission.

In the above embodiments, the purpose of enabling the terminal to resolve time-domain conflicts between an SSB and an uplink transmission of the terminal on an uplink subband based on the indication signaling sent by the network device is achieved.

In combination with some embodiments of the first aspect, in some embodiments, determining the uplink transmission behavior based on the predefined rule includes:
determining a first number of resource blocks (RBs) spaced between a first frequency-domain resource and a second frequency-domain resource; and
in response to determining that the first number of RBs is a positive integer multiple of a second number of RBs, determining to perform the uplink transmission on the uplink subband.

In the above embodiments, the terminal can resolve time-domain conflicts between an SSB and an uplink transmission of the terminal on an uplink subband according to the predefined rule, providing high availability.

In combination with some embodiments of the first aspect, in some embodiments, the second number of RBs is any one of:
a number of RBs included in a guard band; or
a number of RBs included in a first gap, where the first gap is a frequency-domain gap configured by the network device or predefined by a protocol.

In the above embodiment, the terminal can use the number of RBs included in a guard band or the number of RBs included in a first gap as a reference RB number when resolving time-domain conflicts between an SSB and an uplink transmission, providing simple implementation and high availability.

In combination with some embodiments of the first aspect, in some embodiments, the uplink transmission is used for transmitting at least one of:
a physical uplink shared channel (PUSCH) scheduled by downlink control information (DCI);
a Configured Grant PUSCH triggered by DCI;
a physical uplink control channel (PUCCH) corresponding to a physical downlink shared channel (PDSCH) scheduled by DCI;
an uplink reference signal triggered by DCI;
a periodically transmitted PUSCH configured by a radio resource control (RRC) signaling; or
a periodically transmitted PUCCH configured by an RRC signaling.

In the above embodiment, the terminal can perform the aforementioned uplink transmission on the uplink subband, providing high availability.

In a second aspect, an embodiment of the present disclosure provides a method for determining an uplink transmission behavior, including:
in response to determining that a first time-domain resource occupied by a synchronization signal/physical broadcast channel block (SSB) conflicts with a second time-domain resource occupied by an uplink transmission of a terminal on an uplink subband, determining an uplink transmission behavior of the terminal based on a predefined rule or an indication signaling sent to the terminal, where the uplink subband is located in a downlink time unit or a flexible time unit in time domain.

In the above embodiment, the network device can clarify the uplink transmission behavior of the terminal based on a predefined rule or an indication signaling sent to the terminal, ensuring consistent understanding of uplink transmission behavior between the network device and the terminal, and improving the availability and reliability of full-duplex communication.

In combination with some embodiments of the second aspect, in some embodiments, determining the uplink transmission behavior of the terminal based on the indication signaling sent to the terminal includes:
determining, based on downlink control information (DCI) sent to the terminal, that the terminal performs the uplink transmission on the uplink subband.

In combination with some embodiments of the second aspect, in some embodiments, determining, based on the downlink control information (DCI) sent to the terminal, that the terminal performs the uplink transmission on the uplink subband includes:
in response to that a repetition of transmission via a physical uplink channel is enabled, determining, based on the DCI, that the terminal performs a first number of repetitions of the transmission via the physical uplink channel on the uplink subband, where the first number is less than a total number of repetitions.

In combination with some embodiments of the second aspect, in some embodiments, the method further includes:
determining, based on a predefined rule or a new indication signaling sent to the terminal, a new uplink transmission behavior of the terminal, where the new uplink transmission behavior includes whether to perform a second number of repetitions of the transmission via the physical uplink channel on the uplink subband, and the second number is equal to a difference between the total number and the first number.

In combination with some embodiments of the second aspect, in some embodiments, the indication signaling indicates any one of:
whether a time unit where the SSB is located is allowed to be used for performing the uplink transmission; or
whether each SSB occasion included in an SSB burst set is allowed to be used for performing the uplink transmission.

In combination with some embodiments of the second aspect, in some embodiments, determining the uplink transmission behavior of the terminal based on the indication signaling sent to the terminal includes any one of:
determining, based on the indication signaling, that the terminal performs the uplink transmission on the uplink subband in a first time unit, where the first time unit is a time unit where the SSB is located and is allowed to be used for performing the uplink transmission; or
determining, based on the indication signaling, that the terminal performs the uplink transmission on the uplink subband in a first SSB occasion, where the first SSB occasion is an SSB occasion that is allowed to be used for performing the uplink transmission.

In combination with some embodiments of the second aspect, in some embodiments, determining the uplink transmission behavior based on the predefined rule of the terminal includes:
determining a first number of resource blocks (RBs) spaced between a first frequency-domain resource and a second frequency-domain resource; and
in response to determining that the first number of RBs is a positive integer multiple of a second number of RBs, determining that the terminal performs the uplink transmission on the uplink subband.

In combination with some embodiments of the second aspect, in some embodiments, the second number of RBs is any one of:
a number of RBs included in a guard band; or
a number of RBs included in a first gap, where the first gap is a frequency-domain gap configured by the network device or predefined by a protocol.

In combination with some embodiments of the second aspect, in some embodiments, the uplink transmission is used for transmitting at least one of:
a physical uplink shared channel (PUSCH) scheduled by downlink control information (DCI);
a Configured Grant PUSCH triggered by DCI;
a physical uplink control channel (PUCCH) corresponding to a physical downlink shared channel (PDSCH) scheduled by DCI;
an uplink reference signal triggered by DCI;
a periodically transmitted PUSCH configured by a radio resource control (RRC) signaling; or
a periodically transmitted PUCCH configured by an RRC signaling.

In a third aspect, an embodiment of the present disclosure provides a terminal, including:
a processing module, configured to, in response to determining that a first time-domain resource occupied by a synchronization signal/physical broadcast channel block (SSB) conflicts with a second time-domain resource occupied by an uplink transmission of a terminal on an uplink subband, determine an uplink transmission behavior based on a predefined rule or a received indication signaling, where the uplink subband is located in a downlink time unit or a flexible time unit in time domain.

In a fourth aspect, an embodiment of the present disclosure provides a network device, including:
a processing module, configured to, in response to determining that a first time-domain resource occupied by a synchronization signal/physical broadcast channel block (SSB) conflicts with a second time-domain resource occupied by an uplink transmission of a terminal on an uplink subband, determine an uplink transmission behavior of the terminal based on a predefined rule or an indication signaling sent to the terminal, where the uplink subband is located in a downlink time unit or a flexible time unit in time domain.

In a fifth aspect, an embodiment of present disclosure provides a terminal, including:
one or more processors;
where the terminal is configured to execute the method for determining the uplink transmission behavior according to any one of the first aspect.

In a sixth aspect, an embodiment present disclosure provides a network device, including:
one or more processors;
where the network device is configured to execute the method for determining the uplink transmission behavior according to any one of the second aspect.

In a seventh aspect, an embodiment of the present disclosure provides a communication system, including: a terminal and a network device, where the terminal is configured to implement the method for determining the uplink transmission behavior any one of the first aspect, and the network device is configured to implement the method for determining the uplink transmission behavior according to any one of the second aspect.

In an eighth aspect, an embodiment of the present disclosure proposes a storage medium storing instructions that, when executed on a communication device, cause the communication device to execute the method for determining uplink transmission behavior according to any one of the first aspect or the second aspect.

It is understandable that the aforementioned terminal, network device, communication system, storage medium, and computer program are all used to execute the method proposed in the embodiments of the present disclosure. Therefore, the beneficial effects they can achieve may refer to the beneficial effects in the corresponding method, which will not be repeated here.

The embodiments of the present disclosure provide methods and apparatuses for determining an uplink transmission behavior, and storage media. In some embodiments, the term "method for determining an uplink transmission behavior" may be interchangeable with terms such as "information processing method" and "communication method." Similarly, the term "apparatus for determining an uplink transmission behavior" may be interchangeable with terms such as "information processing apparatus" and "communication apparatus," and terms such as 'information processing system" and "communication system" may also be interchangeable.

The embodiments of the present disclosure are not exhaustive and are merely illustrative of some embodiments, and do not constitute specific limitations on the scope of protection of the present disclosure. In the absence of contradictions, each step in an embodiment may be implemented as an independent embodiment, and the steps may be combined arbitrarily. For example, a solution obtained by removing some steps from an embodiment may also be implemented as an independent embodiment. Moreover, the order of steps in an embodiment may be arbitrarily swapped. Additionally, optional implementations in an embodiment may be combined arbitrarily. Furthermore, the embodiments may be combined arbitrarily. For example, some or all steps from different embodiments may be combined arbitrarily, and an embodiment may be arbitrarily combined with optional implementations of other embodiments.

In various embodiments of the present disclosure, unless otherwise specified and unless there is a logical conflict, the terms and/or descriptions between the embodiments are consistent and may refer to each other. Technical features from different embodiments may be combined according to their inherent logical relationships to form new embodiments.

The terminology used in the embodiments of the present disclosure is for the purpose of describing specific embodiments only and is not intended to limit the present disclosure.

In the embodiments of the present disclosure, unless otherwise specified, elements expressed in the singular form, such as "a," "an," "the," "the above," "the aforementioned," "the said," "this," etc., may denote "one and only one" or may denote "one or more," "at least one," etc. For example, when articles such as "a," "an," or "the" are used in translation (e.g., in English), the noun following the article may be understood in the singular form or in the plural form.

In the embodiments of the present disclosure, "a plurality of" means two or more.

In some embodiments, terms such as "at least one of," "one or more," "a plurality of," "multiple," etc., may be used interchangeably.

In some embodiments, expressions such as "at least one of A and B," "A and/or B," "A in one case, B in another case," "in response to condition A, in response to condition B," etc., may, depending on the context, include the following technical solutions: in some embodiments, A (executing A independently of B); in some embodiments, B (executing B independently of A); in some embodiments, selectively executing from A and B (A and B are selectively executed); in some embodiments, both A and B (both A and B are executed). The same applies when there are more branches such as A, B, C, etc.

In some embodiments, expressions such as "A or B" may, depending on the context, include the following technical solutions: in some embodiments, A (executing A independently of B); in some embodiments, B (executing B independently of A); in some embodiments, selectively executing from A and B (A and B are selectively executed). The same applies when there are more branches such as A, B, C, etc.

In the embodiments of the present disclosure, prefixes such as "first" and "second" are merely used to distinguish different described objects and do not impose limitations on the position, order, priority, quantity, or content of the described objects. Descriptions of the objects refer to the claims or the context in the embodiments and should not be construed as imposing additional limitations due to the use of prefixes. For example, if the described object is a "field," the ordinal numbers before "field" in "first field" and "second field" do not limit the position or order between the fields. "First" and "second" do not restrict whether the modified "fields" are in the same message, nor do they restrict the sequence of "first field" and "second field." As another example, if the described object is a "level," the ordinal numbers before "level" in "first level" and "second level" do not limit the priority between the levels. As yet another example, the quantity of the described object is not limited by the ordinal numbers and may be one or more. Taking "first apparatus" as an example, the quantity of "apparatuses" may be one or more. Furthermore, objects modified by different prefixes may be the same or different. For example, if the described object is a "apparatus," "first apparatus" and "second apparatus" may be the same apparatus or different apparatuses, and their types may be the same or different. Similarly, if the described object is "information," "first information" and "second information" may be the same information or different information, and their content may be the same or different.

In some embodiments, expressions such as "including A," "containing A," "used to indicate A," "carrying A," may be interpreted as directly carrying A or indirectly indicating A.

In some embodiments, terms such as "in response to...," "in response to determining...," "in the case of...," " at the time of...," "when...," "if...," "in a case that ...," etc., may be used interchangeably.

In some embodiments, apparatuses and devices may be interpreted as physical or virtual entities. Their names are not limited to those recorded in the embodiments and may, in some cases, also be understood as "equipment," "device," "circuit," "network element," "node," "function," "unit," "section," "system," "network," "entity," "subject," etc.

In some embodiments, "network" may be interpreted as apparatuses included in the network, such as access network devices, core network devices, etc.

In some embodiments, "access network device (AN device)" may also be named as "radio access network device (RAN device)," "base station (BS)," "radio base station," "fixed station," and in some embodiments, may also be understood as "node," "access point," "transmission point (TP)," "reception point (RP)," "transmission/reception point (TRP)," "panel," "antenna panel," "antenna array," "cell," "macro cell," "small cell," "femto cell," "pico cell," "sector," "cell group," "serving cell," "carrier," "component carrier," "bandwidth part (BWP)," etc.

In some embodiments, "terminal" or "terminal device" may be named as "user equipment (UE)," "user terminal," "mobile station (MS)," "mobile terminal (MT)," "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," etc.

In some embodiments, obtaining data, information, etc., shall comply with the laws and regulations of the country in which the entity is located.

In some embodiments, data, information, etc., may be obtained after user consent is obtained.

In addition, each element, each row, or each column in the tables of the present disclosure can be implemented as an independent embodiment, and the combination of any element, any row, and any column can also be implemented as an independent embodiment.

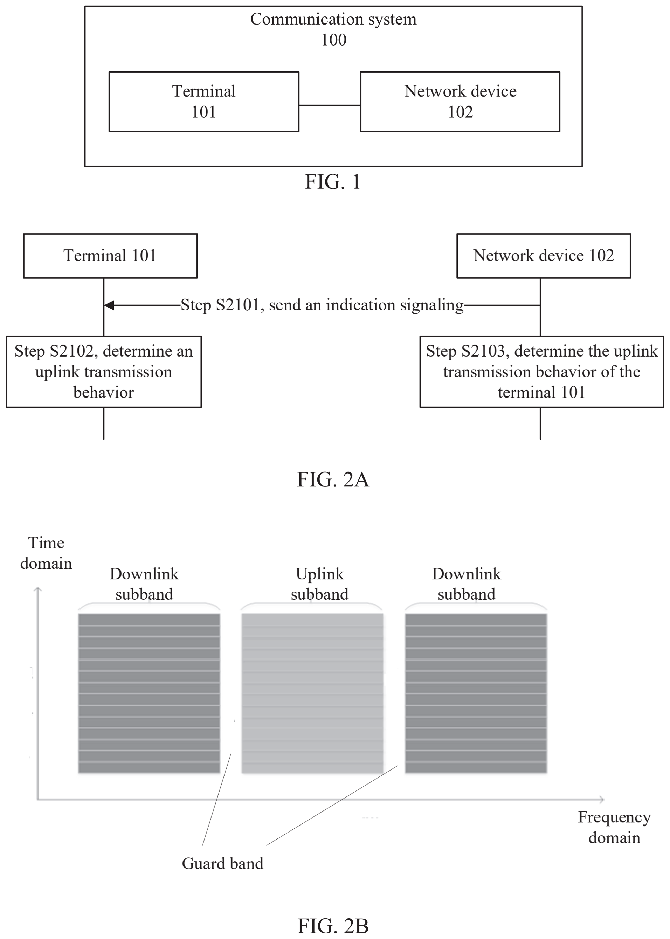

FIG. 1 is a schematic architectural diagram of a communication system according to an embodiment of the present disclosure.

As shown in FIG. 1, a communication system 100 includes a terminal 101 and a network device 102.

In some embodiments, the terminal 101 includes, for example, at least one of a mobile phone, a wearable device, an Internet of Things (IoT) device, a vehicle with communication capabilities, a smart vehicle, a tablet computer (Pad), a computer with wireless transceiver functionality, a virtual reality (VR) terminal device, an augmented reality (AR) terminal device, a wireless terminal in industrial control, a wireless terminal in self-driving, a wireless terminal in remote medical surgery, a wireless terminal in a smart grid, a wireless terminal in transportation safety, a wireless terminal in a smart city, or a wireless terminal in a smart home, but is not limited thereto.

In some embodiments, the network device 102 includes an access network device, such as a node or device that connects terminals to a wireless network. The access network device may include at least one of an evolved NodeB (eNB) in 5G communication systems, a next-generation evolved NodeB (ng-eNB), a next-generation NodeB (gNB), a Node B (NB), a home NodeB (HNB), a home evolved NodeB (HeNB), a wireless backhaul device, a radio network controller (RNC), a base station controller (BSC), a base transceiver station (BTS), a baseband unit (BBU), a mobile switching center, a base station in 6G communication systems, an Open RAN (Open Radio Access Network), a Cloud RAN, base stations in other communication systems, access nodes in Wi-Fi systems, etc., but is not limited thereto.

In some embodiments, the technical solutions of the present disclosure may be applied to an Open RAN architecture. In such cases, the interfaces between or within the access network devices mentioned in the embodiments of the present disclosure may become internal interfaces of Open RAN. The processes and information exchanges between these internal interfaces may be implemented via software or programs.

In some embodiments, an access network device may consist of a central unit (CU) and a distributed unit (DU). The CU may also be named as a control unit. The CU-DU structure allows the protocol layers of the access network device to be split, with some protocol layer functions centrally controlled by the CU, and the remaining or all protocol layer functions distributed among DUs, which are centrally controlled by the CU, but it is not limited thereto.

In some embodiments, the network device 102 includes a core network device. The core network device may be a single device or multiple devices or groups of devices. Network elements may be virtual or physical. The core network may include, for example, at least one of an Evolved Packet Core (EPC), a 5G Core Network (5GCN), or a Next Generation Core (NGC).

It is to be understood that the communication system described in the embodiments of the present disclosure is intended to more clearly illustrate the technical solutions of the embodiments of the present disclosure and does not constitute a limitation of the technical solutions proposed by the embodiments of the present disclosure, and a person of ordinary skill in the art may know that, with an evolution of a system architecture and an emergence of a new business scenario, the technical solutions proposed by the embodiments of the present disclosure are equally applicable to similar technical problems.

The following embodiments of the present disclosure can be applied to the communication system 100 shown in FIG. 1, or part of its entities, but are not limited thereto. The entities shown in FIG. 1 are exemplary. The communication system may include all or part of the entities in FIG. 1, and may also include other entities not shown in FIG. 1. The number and form of each entity are arbitrary, and the entities may be physical or virtual. The connection relationships between the entities are exemplary. The entities may or may not be connected to each other, and the connections can be in any form, either direct or indirect, and either wired or wireless.

The embodiments of the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), 5G New Radio (NR), Future Radio Access (FRA), New-Radio Access Technology (RAT), New Radio (NR), New radio access (NX), Future generation radio access (FX), Global System for Mobile communications (GSM^{®}), CDMA2000, Ultra Mobile Broadband (UMB), IEEE 802.11 (Wi-Fi^{®}), IEEE 802.16 (WiMAX^{®}), IEEE 802.20, Ultra-WideBand (UWB), Bluetooth^{®}, Public Land Mobile Network (PLMN) networks, systems using other communication methods, next-generation systems based on these, etc. Additionally, a combination of multiple systems (e.g., a combination of LTE or LTE-A with 5G, etc.) may be applied.

FIG. 2A is an interaction schematic diagram illustrating a method for determining an uplink transmission behavior according to an embodiment of the present disclosure. As shown in FIG. 2A, the embodiment of the present disclosure relates to a method for determining an uplink transmission behavior. The method includes the following steps.

Step S2101: The network device 102 sends an indication signaling to the terminal 101.

In some embodiments, the terminal 101 receives the indication signaling.

In some embodiments, the name of the indication signaling is not limited. For example, it may be named as an indication message, a first message, first signaling, etc.

In some embodiments, the network device 102 determines that a first time-domain resource occupied by a Synchronization Signal/physical broadcast channel (PBCH) Block (SSB) conflicts with a second time-domain resource occupied by an uplink transmission of the terminal on an uplink subband, and sends the indication information to the terminal 101.

In some embodiments, the network device 102 periodically transmits SSBs.

In some embodiments, the uplink subband is located within a first type of time unit, which may be defined as a Subband-Based Full Duplex (SBFD) time unit. An example of an SBFD time unit is shown in FIG. 2B.

In some embodiments, the uplink subband is located within a downlink (DL) time unit or a flexible time unit in the time domain.

In some embodiments, the time unit may be defined in terms of slots, Orthogonal Frequency Division Multiplexing (OFDM) symbols, or spans. The present disclosure does not limit this. A span includes a plurality of consecutive symbols.

In some embodiments, the uplink transmission is used for transmitting at least one of: a Physical Uplink Shared Channel (PUSCH) scheduled by Downlink Control Information (DCI); a Configured Grant PUSCH (CG-PUSCH) triggered by DCI; a Physical Uplink Control Channel (PUCCH) corresponding to a Physical Downlink Shared Channel (PDSCH) scheduled by DCI; an uplink reference signal triggered by DCI; a periodically transmitted PUSCH configured by a Radio Resource Control (RRC) signaling; or a periodically transmitted PUCCH configured by an RRC signaling.

The uplink reference signal includes, but is not limited to, a Sounding Reference Signal (SRS).

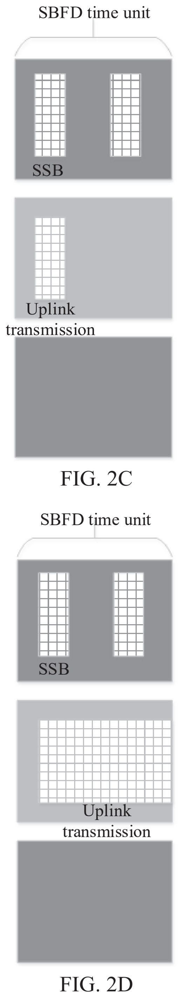

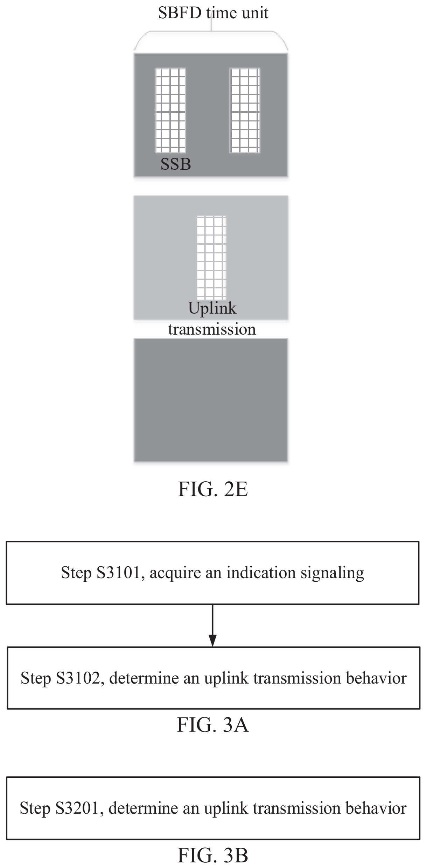

In some embodiments, the conflict between the first time-domain resource occupied by the SSB and the second time-domain resource occupied by the uplink transmission of the terminal on the uplink subband includes, but is not limited to, at least one of: the first time-domain resource and the second time-domain resource completely overlap, as shown in FIG. 2C; the first time-domain resource and the second time-domain resource partially overlap, as shown in FIG. 2D; or the first time-domain resource and the second time-domain resource do not overlap but are located within the same time unit, as shown in FIG. 2E.

In some embodiments, the indication signaling includes, but is not limited to, DCI, a Media Access Control Element (MAC CE), an RRC signaling, etc.

In some embodiments, the network device 102 instructs the terminal 101 to enable a repetition of transmission via a physical uplink channel. The physical uplink channel includes, but is not limited to, PUCCH or PUSCH.

In some embodiments, the indication signaling may be used to indicate whether a time unit where the SSB is located is allowed to be used for performing the uplink transmission.

For example, the indication signaling may occupy 1 bit. An indication signaling bit value of "1" indicates that the time unit where the SSB is located is allowed to be used for performing the uplink transmission. An indication signaling bit value of "0" indicates that the time unit where the SSB is located is not allowed to be used for performing the uplink transmission.

For another example, the indication signaling may occupy 1 bit. An indication signaling bit value of "0" indicates that the time unit where the SSB is located is allowed to be used for performing the uplink transmission. An indication signaling bit value of "1" indicates that the time unit where the SSB is located is not allowed to be used for performing the uplink transmission.

In some embodiments, the indication signaling may be used to indicate whether each SSB occasion included in an SSB burst set is allowed to be used for performing the uplink transmission.

An SSB occasion is a time point at which the network device transmits an SSB.

For example, the indication signaling may use a bitmap to indicate whether each SSB occasion included in an SSB burst set is allowed to be used for performing the uplink transmission.

For example, an SSB burst set includes N SSB occasions, where N is a positive integer, such as 1, 2, 3, etc. The indication signaling may occupy N bits, with a bit value of each bit correspondingly indicating whether the corresponding SSB occasion is allowed to be used for performing the uplink transmission.

Assuming a bit value of "1" indicates that the corresponding SSB occasion is allowed to be used for performing the uplink transmission, and a bit value of "0" indicates that the corresponding SSB occasion is not allowed to be used for performing the uplink transmission. If N=6, and the indication signaling is "110010", the indication signaling indicates that the 1st, 2nd, and 5th SSB occasions is allowed to be used for performing the uplink transmission.

Step S2102: The terminal 101 determines an uplink transmission behavior.

In some embodiments, the terminal 101 determines the uplink transmission behavior based on the received indication signaling.

In some embodiments, the terminal 101 determines whether to perform the uplink transmission on the uplink subband based on the received indication signaling. In some embodiments, the indication signaling includes DCI, and the terminal 101 determines to perform the uplink transmission on the uplink subband. That is, the terminal 101 will not receive the SSB sent by the network device 102.

In some embodiments, the indication signaling includes DCI, the network device 102 has instructed the terminal 101 to enable a repetition of transmission via a physical uplink channel, and the terminal 101 determines to perform a first number of repetitions of the transmission via the physical uplink channel on the uplink subband. The first number is less than a total number of repetitions. The first number is a positive integer.

For example, if the network device 102 instructs the terminal 101 to enable PUSCH repetition or Transport Block processing over Multi-Slot PUSCH (TBoMS), the terminal 101 determines to perform a first number of repetitions of PUSCH on the uplink subband.

For example, the network device 102 instructs the terminal 101 to enable PUCCH repetition, and the terminal 101 determines to perform a first number of repetitions of PUCCH on the uplink subband.

Assuming that the total number of repetitions on the physical uplink channel is 32, the first number can be a positive integer less than 32, such as 1, 2, 3, ..., 31.

In some embodiments, the terminal 101 determines a new uplink transmission behavior based on a predefined rule. The new uplink transmission behavior includes whether to perform a second number of repetitions of the transmission via the physical uplink channel on the uplink subband, and the second number is equal to a difference between the total number and the first number.

In the embodiment of the present disclosure, when uplink channel repetition is enabled, the terminal 101 may combine the indication signaling and predefined rule to jointly determine the uplink transmission behavior.

For example, the terminal 101 determines to perform the first number of repetitions of the transmission via the physical uplink channel on the uplink subband based on the received indication signaling.

Further, the terminal determines whether to perform the second number of repetitions of the transmission via the physical uplink channel on the uplink subband based on the predefined rule. The manner in which the terminal 101 determines to perform the second number of repetitions of the transmission via the physical uplink channel on the uplink subband based on the predefined rule will be introduced in subsequent embodiments and is not detailed here.

For example, the terminal 101 determines to perform the second number of repetitions of the transmission via the physical uplink channel on the uplink subband based on the predefined rule.

For example, the terminal 101 determines not to perform the second number of repetitions of the transmission via the physical uplink channel on the uplink subband based on the predefined rule.

In some embodiments, the terminal 101 determines a new uplink transmission behavior based on whether a new indication signaling is received. The new uplink transmission behavior includes whether to perform a second number of repetitions of the transmission via the physical uplink channel on the uplink subband, and the second number is equal to a difference between the total number and the first number.

For example, the terminal 101 receives the new indication signaling, and determines to perform the second number of repetitions of the transmission via the physical uplink channel on the uplink subband.

For example, the terminal 101 does not receive the new indication signaling, and determines not to perform the second number of repetitions of the transmission via the physical uplink channel on the uplink subband.

Assuming the total number is 32, the first number is 16, and the second number is also 16. After performing 16 repetitions of the transmission via the physical uplink channel on the uplink subband based on the indication signaling sent by the network device 102, if the terminal 101 does not receive new indication signaling from the network device 102, it determines not to perform the remaining 16 repetitions of the transmission via the physical uplink channel on the uplink subband. At this point, terminal 101 can receive the SSB sent by network 102.

In other words, for the terminal 101, whether to perform the remaining number of repetitions of the transmission via the physical uplink channel can be re-determined based on the predefined rule or the new indication signaling sent by the network device 102.

In some optional embodiments, for uplink transmissions semi-statically configured by the network device 102, such as CG-PUSCH triggered by DCI, the terminal 101 does not expect to perform the uplink transmission on SSB symbols.

In some embodiments, the indication signaling indicates whether a time unit where the SSB is located is allowed to be used for performing the uplink transmission. The terminal 101, based on the indication signaling, performs the uplink transmission on the uplink subband in a first time unit, where the first time unit is a time unit where the SSB is located and is allowed to be used for performing the uplink transmission.

Based on the indication signaling, the terminal 101 can receive the SSB sent by the network device 102 within a second time unit where the uplink subband is located. The second time unit is a time unit where the SSB is located but which is not allowed to be used for performing the uplink transmission.

In some embodiments, the indication signaling indicates whether each SSB occasion included in an SSB burst set is allowed to be used for performing the uplink transmission. The terminal 101, based on the indication signaling, performs the uplink transmission on the uplink subband in a first SSB occasion, where the first SSB occasion is an SSB occasion that is allowed to be used for performing the uplink transmission.

Based on the indication signaling, the terminal 101 can receive the SSB sent by the network device 102 on a second SSB occasion where the uplink subband is located. The second SSB occasion is an SSB occasion that is not allowed to be used for performing the uplink transmission.

In some embodiments, step S2101 is an optional step. That is, the terminal 101 can directly determine the uplink transmission behavior based on the predefined rule.

In some embodiments, the predefined rule includes, but is not limited to, determining the uplink transmission behavior based on a relationship between a first number of Resource Blocks (RBs) spaced between a first frequency-domain resource and a second frequency-domain resource, and a reference second number of RBs.

In some optional embodiments, the second number of RBs may be the number of RBs included in a guard band. A gap between frequency bands, which does not have a transmission function, is named as a guard band.

In some optional embodiments, the second number of RBs may be the number of RBs included in a first gap (GAP). Here, the first GAP may be configured by the network device 102 or predefined by a protocol.

In some optional embodiments, if the first number of RBs spaced between a first frequency-domain resource and a second frequency-domain resource is a positive integer multiple of the reference second number of RBs, the terminal 101 determines to perform the uplink transmission on the uplink subband.

For example, if the first number of RBs equals the second number of RBs, or the first number of RBs is 2 times, 3 times, etc., of the second number of RBs, the terminal 101 may determine to perform the uplink transmission on the uplink subband.

If the first number of RBs is not a positive integer multiple of the second number of RBs, the terminal 101 may receive the SSB sent by the network device 102.

In some optional embodiments, when a repetition of transmission via the physical uplink channel is enabled, the terminal 101 determines to perform the first number of repetitions of the transmission via the physical uplink channel on the uplink subband based on the received indication signaling.

Further, the terminal determines a new uplink transmission behavior based on the predefined rule. The new uplink transmission behavior includes whether to perform the second number of repetitions of the transmission via the physical uplink channel on the uplink subband. The second number is equal to the difference between the total number and the first number.

For example, if the first number of RBs spaced between a first frequency-domain resource and a second frequency-domain resource is a positive integer multiple of the reference second number of RBs, the terminal 101 determines to perform the second number of repetitions of the transmission via the physical uplink channel on the uplink subband.

For example, if the first number of RBs is not a positive integer multiple of the reference second number of RBs, the terminal 101 determines not to perform the second number of repetitions of the transmission via the physical uplink channel on the uplink subband.

Step S2103: The network device 102 determines the uplink transmission behavior of the terminal 101.

In some embodiments, the network device 102 determines the uplink transmission behavior of the terminal 101 based on the sent indication signaling.

In some embodiments, the network device 102 determines whether the terminal 101 performs the uplink transmission on the uplink subband based on the sent indication signaling.

In some optional embodiments, if the network device 102 determines that the terminal 101 performs the uplink transmission on the uplink subband, the network device 102 may receive a channel or signal of the uplink transmission, and the network device 102 may not send an SSB.

In some optional embodiments, if the network device 102 determines that the terminal 101 does not perform the uplink transmission on the uplink subband, the network device 102 may send an SSB.

In some embodiments, the indication signaling includes DCI, and the network device 102 determines that the terminal 101 performs the uplink transmission on the uplink subband. That is, the terminal 101 will not receive the SSB sent by the network device 102. Correspondingly, the network device 102 may receive the channel or signal of the uplink transmission on the uplink subband and not send an SSB.

In some embodiments, the indication signaling includes DCI, the network device 102 has instructed the terminal 101 to enable a repetition of transmission via a physical uplink channel, and the network device 102 determines that the terminal 101 performs a first number of repetitions of the transmission via the physical uplink channel on the uplink subband. The first number is less than a total number of repetitions. The first number is a positive integer.

For example, the network device 102 instructs the terminal 101 to enable PUSCH repetition or TBoMS, and the network device 102 determines that the terminal 101 performs the first number of repetitions of PUSCH on the uplink subband.

For example, the network device 102 instructs the terminal 101 to enable PUCCH repetition, and the network device 102 determines that the terminal 101 performs the first number of repetitions of PUCCH on the uplink subband.

Assuming that the total number of repetitions on the physical uplink channel is 32, the first number can be a positive integer less than 32, such as 1, 2, 3, ..., 31.

In some embodiments, the network device 102 determines a new uplink transmission behavior of the terminal 101 based on a predefined rule or a new indication signaling sent to the terminal 101. The new uplink transmission behavior includes whether to perform a second number of repetitions of the transmission via the physical uplink channel on the uplink subband, and the second number is equal to a difference between the total number and the first number.

For the network device 102, it may re-determine, based on the predefined rule, whether the terminal 101 performs remaining number of repetitions of the transmission via the physical uplink channel, or determine, based on whether the new indication signaling has been sent to the terminal 101, whether the terminal 101 performs remaining number of repetitions of the transmission via the physical uplink channel.

For example, the network device 102 sends the new indication signaling to the terminal 101, and the network device 102 determines that the terminal 101 performs the second number of repetitions of the transmission via the physical uplink channel on the uplink subband.

For example, the network device 102 does not send the new indication signaling to the terminal 101, and the network device 102 determines that the terminal 101 does not perform the second number of repetitions of the transmission via the physical uplink channel on the uplink subband.

Assuming the total number is 32, the first number is 16, and the second number is also 16. Based on the indication signaling sent to the terminal 101, after determining that the terminal 101 has performed 16 repetitions of the transmission via the physical uplink channel on the uplink subband, if the network device 102 does not send the new indication signaling to the terminal 101, the network device 102 determines that the terminal 101 will not perform the remaining 16 repetitions of the transmission via the physical uplink channel on the uplink subband. At this point, the network device 102 may send an SSB to the terminal 101.

For example, based on the predefined rule, the network device 102 determines that the terminal 101 performs the second number of repetitions of the transmission via the physical uplink channel on the uplink subband.

For another example, based on the predefined rule, the network device 102 determines that the terminal 101 does not perform the second number of repetitions of the transmission via the physical uplink channel on the uplink subband.

In some optional embodiments, for uplink transmissions semi-statically configured by the network device 102, such as CG-PUSCH triggered by DCI, the network device 102 does not receive the uplink transmission of the terminal on SSB symbols.

In some embodiments, the indication signaling indicates whether a time unit where the SSB is located is allowed to be used for performing the uplink transmission. The network device 102 determines that the terminal 101, based on the indication signaling, performs the uplink transmission on the uplink subband in a first time unit, where the first time unit is a time unit where the SSB is located and is allowed to be used for performing the uplink transmission.

The network device 102 determines that the terminal 101, based on the indication signaling, receives the SSB sent by the network device 102 within a second time unit where the uplink subband is located. The second time unit is a time unit where the SSB is located but which is not allowed to be used for performing the uplink transmission.

In some embodiments, the indication signaling indicates whether each SSB occasion included in an SSB burst set is allowed to be used for performing the uplink transmission. An SSB burst is a time range within an SSB transmission period during which a cell sends all SSBs. The network device 102 determines that the terminal 101, based on the indication signaling, performs the uplink transmission on the uplink subband in a first SSB occasion, where the first SSB occasion is an SSB occasion that is allowed to be used for performing the uplink transmission.

The network device 102 determines that the terminal 101, based on the indication signaling, can receive the SSB sent by the network device 102 on a second SSB occasion where the uplink subband is located. The second SSB occasion is an SSB occasion that is not allowed to be used for performing the uplink transmission.

In some embodiments, step S2101 is an optional step. That is, the network device 102 can directly determine the uplink transmission behavior of the terminal 101 based on the predefined rule.

In some embodiments, the predefined rule includes, but is not limited to, determining the uplink transmission behavior of the terminal 101 based on a relationship between a first number of Resource Blocks (RBs) spaced between a first frequency-domain resource and a second frequency-domain resource, and a reference second number of RBs.

In some optional embodiments, the second number of RBs may be the number of RBs included in a guard band.

In some optional embodiments, the second number of RBs may be the number of RBs included in a first gap (GAP). Here, the first GAP may be configured by the network device 102 or predefined by a protocol.

In some optional embodiments, if the first number of RBs spaced between a first frequency-domain resource and a second frequency-domain resource is a positive integer multiple of the reference second number of RBs, the terminal 101 determines to perform the uplink transmission on the uplink subband.

For example, if the first number of RBs equals the second number of RBs, or the first number of RBs is 2 times, 3 times, etc., of the second number of RBs, the terminal 101 may determine to perform the uplink transmission on the uplink subband.

If the first number of RBs is not a positive integer multiple of the second number of RBs, the network device 102 determines that the terminal 101 receives the SSB sent by the network device 102.

In some embodiments, the uplink transmission is used for transmitting at least one of: a PUSCH scheduled by DCI; a Configured Grant PUSCH triggered by DCI; a PUCCH corresponding to a PDSCH scheduled by DCI; an uplink reference signal triggered by DCI; a periodically transmitted PUSCH configured by an RRC signaling; or a periodically transmitted PUCCH configured by an RRC signaling.

In an example, the network device 102 schedules, triggers, or configures the terminal to perform the aforementioned uplink transmission via DCI or RRC signaling. This DCI or RRC signaling may simultaneously serve as the indication signaling, enabling the terminal 101 to determine the uplink transmission behavior.

For example, the terminal 101 receives DCI sent by the network device 102, where the DCI is used to schedule a PUSCH. The terminal 101 determines, based on the DCI, to perform the uplink transmission on the uplink subband. Specifically, the terminal 101 may transmit the PUSCH scheduled by the DCI on the uplink subband.

For example, the terminal 101 receives an RRC signaling sent by the network device 102, where the RRC signaling configures a periodically transmitted PUCCH. The terminal 101 determines, based on the RRC signaling, to perform the uplink transmission on the uplink subband. Specifically, the terminal 101 may transmit the PUCCH configured by the RRC signaling on the uplink subband.

In some embodiments, the uplink transmission is used for transmitting at least one of: a PUSCH scheduled by DCI; a Configured Grant PUSCH triggered by DCI; a PUCCH corresponding to a PDSCH scheduled by DCI; an uplink reference signal triggered by DCI; a periodically transmitted PUSCH configured by an RRC signaling; or a periodically transmitted PUCCH configured by an RRC signaling.

The terminal 101 receives the aforementioned DCI or RRC signaling. Upon determining that the first time-domain resource occupied by a synchronization signal/PBCH block (SSB) conflicts with the second time-domain resource occupied by the uplink transmission of the terminal 101 on the uplink subband, the terminal 101 directly determines its uplink transmission behavior based on the predefined rule.

For example, the terminal 101 receives DCI sent by the network device 102, where the DCI is used to schedule a PUSCH. However, based on the predefined rule, the terminal 101 determines not to perform the uplink transmission on the uplink subband. Therefore, although the network device 102 sent the DCI, the terminal 101 may not transmit the PUSCH scheduled by the DCI on the uplink subband. In some embodiments, the names of information, etc., are not limited to those mentioned in the embodiments. Terms such as "information," "message," "signal," "signaling," "report," "configuration," "indication," "instruction," "command," "channel," "parameter," "domain," "field," "symbol," "symbol," "codebook," "codeword," "codepoint," "bit," "data," "program," "chip," etc., may be used interchangeably.

In some embodiments, terms such as "uplink," "uplink link," "physical uplink," etc., may be used interchangeably.

In some embodiments, terms such as "radio," "wireless," "radio access network (RAN)," "access network (AN)," "RAN-based," etc., may be used interchangeably.

In some embodiments, terms such as "send," "transmit," "report," "deliver," "transmit," "bidirectional transmission," "send and/or receive," etc., may be used interchangeably.

In some embodiments, terms such as "frame," "radio frame," "subframe," "slot," "sub-slot," "mini-slot," "symbol," "symbol," "transmission time interval (TTI)," etc., may be used interchangeably.

In some embodiments, terms such as "obtain," "acquire," "receive," "transmit," "bidirectional transmission," "send and/or receive" may be used interchangeably. They may be interpreted as receiving from another entity, obtaining from a protocol, obtaining from a higher layer, deriving from its own processing, autonomously implementing, and other similar meanings.

In some embodiments, terms such as "send," "transmit," "report," "deliver," "transmit," "bidirectional transmission," "send and/or receive," etc., may be used interchangeably.

In some embodiments, terms such as "certain," "preset," "predefined," "configured," "indicated," "one," "any," "first," etc., may be used interchangeably. "Certain A," "preset A," "predefined A," "configured A," "indicated A," "one A," "any A," "first A" may be interpreted as "A" pre-specified in a protocol, etc., or "A" obtained through configuration, setting, or indication, or as a certain A, an A, any A, or first A, etc., but are not limited thereto.

In some embodiments, determination or judgment may be made based on a value represented by 1 bit (0 or 1), a boolean value represented by true or false, or numerical comparison (e.g., comparison with a predetermined value), but is not limited thereto.

In some embodiments, "not expecting to receive" may be interpreted as not receiving on time-domain and/or frequency-domain resources, or as, after receiving data, etc., not performing subsequent processing on that data; "not expecting to send" may be interpreted as not sending, or as sending but not expecting the receiver to respond to the sent content.

In some embodiments, the method for determining an uplink transmission behavior involved in the embodiments of the present disclosure may include at least one of steps S2101 to S2103. For example, step S2101 may be implemented as an independent embodiment, step S2102 may be implemented as an independent embodiment, steps S2102+S2103 may be implemented as an independent embodiment, steps S2101 to S2103 may be implemented as an independent embodiment, but it is not limited thereto.

In some embodiments, step S2102 and step S2103 may be swapped in order or executed simultaneously.

In some embodiments, step S2101 is optional, and in different embodiments, one or more of these steps may be omitted or substituted.

In some embodiments, steps S2101 to S2103 are optional, and in different embodiments, one or more of these steps may be omitted or substituted.

In the above embodiments, the issue of time-domain conflict between the SSB sent by the network device and the uplink transmission of the terminal on the uplink subband can be resolved, the terminal behavior is clarified, and the availability and reliability of full-duplex communication are improved.

FIG. 3A is a flowchart illustrating a method for determining an uplink transmission behavior according to an embodiment of the present disclosure. As shown in FIG. 3A, the embodiment of the present disclosure relates to a method for determining an uplink transmission behavior. The method includes the following steps.

Step S3101: Acquire an indication signaling.

In some embodiments, the terminal 101 acquires an indication signaling sent by the network device 102, but it is not limited thereto. It may also receive an indication signaling sent by other entities.

In some embodiments, the terminal 101 acquires an indication signaling specified by a protocol.

In some embodiments, the terminal 101 performs processing to obtain the indication signaling.

In some embodiments, step S3101 is omitted, and the terminal 101 autonomously implements a function indicated by a response message, or the aforementioned function is default or preset.

In some embodiments, the terminal 101 acquires the indication signaling when a first time-domain resource occupied by an SSB conflicts with a second time-domain resource occupied by an uplink transmission of the terminal on an uplink subband.

In some embodiments, for optional implementations of step S3101, reference may be made to the optional implementations of step S2101 in FIG. 2A and other relevant parts in the embodiments related to FIG. 2A, which are not repeated here.

Step S3102: Determine an uplink transmission behavior.

In some embodiments, the terminal 101 determines the uplink transmission behavior on the uplink subband based on the indication signaling.

In some embodiments, for optional implementations of step S3102, reference may be made to the optional implementations of step S2102 in FIG. 2A and other relevant parts in the embodiments related to FIG. 2A, which are not repeated here.

The communication method involved in the embodiment of the present disclosure may include at least one of steps S3101 to S3102. For example, step S3101 may be implemented as an independent embodiment, step S3102 may be implemented as an independent embodiment, and steps S3101 to S3102 may be implemented as an independent embodiment, but it is not limited thereto.

In some embodiments, step S3102 is optional, and in different embodiments, one or more of these steps may be omitted or substituted.

In some embodiments, step S3101 is optional, and in different embodiments, one or more of these steps may be omitted or substituted.

In the above embodiments, the purpose of enabling the terminal to resolve time-domain conflicts between an SSB and an uplink transmission of the terminal on an uplink subband based on the received indication signaling is achieved.

FIG. 3B is a flowchart illustrating a method for determining an uplink transmission behavior according to an embodiment of the present disclosure. As shown in FIG. 3B, the embodiment of the present disclosure relates to a method for determining an uplink transmission behavior. The method includes the following steps.

Step S3201: Determine an uplink transmission behavior.

In some embodiments, the terminal 101 determines the uplink transmission behavior based on a predefined rule.

In some embodiments, the terminal 101 determines the uplink transmission behavior on the uplink subband based on the predefined rule when a first time-domain resource occupied by an SSB conflicts with a second time-domain resource occupied by an uplink transmission of the terminal on an uplink subband.

In some embodiments, the predefined rule includes, but is not limited to, determining the uplink transmission behavior of the terminal 101 based on a relationship between a first number of Resource Blocks (RBs) spaced between a first frequency-domain resource and a second frequency-domain resource, and a reference second number of RBs.

In some embodiments, for optional implementations of step S3201, reference may be made to the optional implementations of step S2102 in FIG. 2A and other relevant parts in the embodiments related to FIG. 2A, which are not repeated here.

The communication method involved in the embodiment of the present disclosure may include step S3201. For example, step S3201 may be implemented as an independent embodiment, but it is not limited thereto.

In some embodiments, step S3201 is optional, and in different embodiments, one or more of these steps may be omitted or substituted.

In the above embodiments, the terminal can resolve time-domain conflicts between an SSB and an uplink transmission of the terminal on an uplink subband according to the predefined rule, providing high availability.

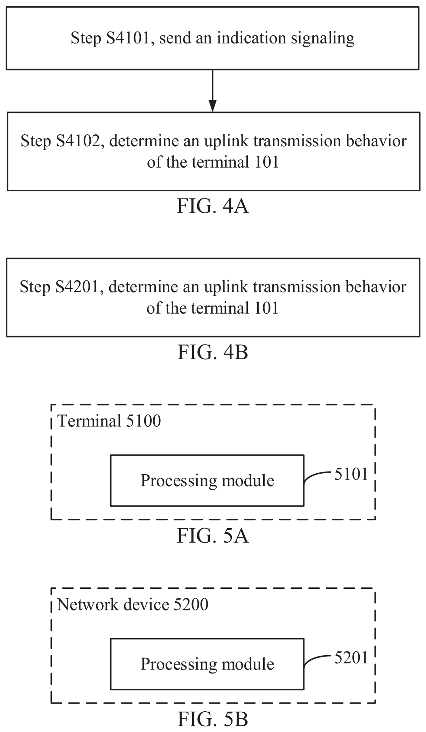

FIG. 4A is a flowchart illustrating a method for determining an uplink transmission behavior according to an embodiment of the present disclosure. As shown in FIG. 4A, the embodiment of the present disclosure relates to a method for determining an uplink transmission behavior. The method includes the following steps.

Step S4101: Send an indication signaling.

In some embodiments, the network device 102 sends an indication signaling to the terminal 101.

In some embodiments, the network device 102 sends the indication signaling to the terminal 101 when a first time-domain resource occupied by an SSB conflicts with a second time-domain resource occupied by an uplink transmission of the terminal on an uplink subband.

In some embodiments, for optional implementations of step S4101, reference may be made to the optional implementations of step S2101 in FIG. 2A and other relevant parts in the embodiments related to FIG. 2A, which are not repeated here.

Step S4102: Determine an uplink transmission behavior of the terminal 101.

In some embodiments, for optional implementations of step S4102, reference may be made to the optional implementations of step S2103 in FIG. 2A and other relevant parts in the embodiments related to FIG. 2A, which are not repeated here.

The communication method involved in the embodiment of the present disclosure may include at least one of steps S4101 to S4102. For example, step S4101 may be implemented as an independent embodiment, step S4102 may be implemented as an independent embodiment, and steps S4101 to S4102 may be implemented as an independent embodiment, but it is not limited thereto.

In some embodiments, step S4102 is optional, and in different embodiments, one or more of these steps may be omitted or substituted.

In some embodiments, step S4101 is optional, and in different embodiments, one or more of these steps may be omitted or substituted.

In the above embodiments, the network device may send the indication signaling to the terminal, thereby clarifying the terminal's behavior when an SSB conflicts with the uplink transmission of the terminal on the uplink subband in the time domain.

FIG. 4B is a flowchart illustrating a method for determining an uplink transmission behavior according to an embodiment of the present disclosure. As shown in FIG. 4B, the embodiment of the present disclosure relates to a method for determining an uplink transmission behavior. The method includes the following steps.

Step S4201: Determine an uplink transmission behavior of the terminal 101.

In some embodiments, the network device 102 determines the uplink transmission behavior of the terminal 101 on the uplink subband based on the predefined rule when a first time-domain resource occupied by an SSB conflicts with a second time-domain resource occupied by an uplink transmission of the terminal on an uplink subband.

In some embodiments, for optional implementations of step S4201, reference may be made to the optional implementations of step S2103 in FIG. 2A and other relevant parts in the embodiments related to FIG. 2A, which are not repeated here.

The communication method involved in the embodiment of the present disclosure may include step S4201. For example, step S4201 may be implemented as an independent embodiment, but it is not limited thereto.

In some embodiments, step S4201 is optional, and in different embodiments, one or more of these steps may be omitted or substituted.

In the above embodiments, the network device may clarify the terminal's behavior based on the predefined rule when an SSB conflicts with the uplink transmission of the terminal on the uplink subband in the time domain.

The following provides further illustrative examples of the above solution provided in the embodiments of the present disclosure.

### Terminal 101:

When an SSB sent by the network device 102 conflicts with an uplink transmission in an uplink subband (UL subband) in time domain, the terminal determines whether it can send the uplink transmission based on a predefined rule or an indication signaling sent by the network device 102.

Method 1: For uplink transmissions scheduled or triggered by DCI, the terminal sends an uplink transmission within the range of UL subband according to the indication of the DCI.

The uplink transmission includes at least one of the following uplink channels or signals: a PUSCH scheduled by DCI, a Type-2 Configured Grant PUSCH triggered by DCI, a PUCCH transmission corresponding to a PDSCH scheduled by DCI, an SRS triggered by DCI, a periodically transmitted PUSCH configured by a Radio Resource Control (RRC) signaling, or a periodically transmitted PUCCH configured by an RRC signaling, etc.

Furthermore, if the network device 102 instructs the terminal 101 to enable PUSCH repetition or TBoMS, for non-first PUSCH transmissions, it is determined whether the PUSCH can be sent within the UL subband based on a predefined method or an indication from the network device 102.

Furthermore, if the network device 102 instructs the terminal 101 to enable PUCCH repetition, for non-first PUCCH transmissions, it is determined whether the PUCCH can be sent within the UL subband based on a predefined method or an indication from a base station.

Furthermore, for semi-statically configured uplink transmissions, the terminal 101 does not expect to send the uplink transmission on the SSB symbol.

Method 2: The terminal 101 determines whether an uplink transmission can be sent within the UL subband on the SSB symbol based on a frequency-domain distance between the UL subband and the SSB.

The GAP is a guard band configured by the network device 102, a multiple of the guard band, a GAP indicated by the base station, or a GAP predefined by the protocol.

Method 3: The terminal 101 determines whether an uplink transmission can be sent within the UL subband on the SSB symbol based on indication signaling from the network device 102.

The terminal 101 receives the indication signaling sent by the network device 102 to determine whether the SSB symbol can be used for uplink transmission.

The indication signaling is a valid pattern of SSB occasions within an SSB burst.

### Network device 102:

When an SSB sent by the network device 102 conflicts with an uplink transmission in a UL subband in time domain, the network device 102 notifies the terminal 101 on how to handle the relevant conflict through a predefined rule or explicit signaling.

Method 1: For uplink transmissions scheduled or triggered by DCI, the network device 102 receives an uplink transmission within the UL subband according to the indication of the DCI.

The specific method is as described on the terminal 101 side and will not be repeated here.

Method 2: The network device 102 determines whether an uplink transmission can be received within the UL subband on the SSB symbol based on a frequency-domain distance between the UL subband and the SSB.

Correspondingly, the network device 102 either receives or does not receive the uplink transmission within the UL subband.

Method 3: The network device 102 instructs the terminal 101 to determine whether an uplink transmission can be sent within the UL subband on the SSB symbol.

The specific method is as described on the terminal 101 side and will not be repeated here.

Embodiment 1: Assume the terminal is a terminal with full-duplex capability, meaning the terminal can transmit uplink within a UL subband on DL or flexible symbols, or receive downlink within a DL subband on UL or flexible symbols. Assume the network device 102 is a full-duplex base station, meaning the network device 102 can simultaneously perform transmission and reception at the same time.

In this embodiment, a UL subband on a DL symbol is used as an example for description. Of course, the method described in this embodiment can be applied to other full-duplex scenarios.

In this embodiment, assume the network device 102 simultaneously transmits an SSB and schedules or configures the terminal to transmit an uplink channel or uplink signal on an SBFD symbol. The SSB and the uplink transmission overlap in the time domain. Furthermore, the overlap can mean that the SSB and the uplink transmission overlap on some OFDM symbols, or completely overlap on all OFDM symbols, or that the SSB and the uplink transmission are transmitted in the same SBFD slot but there is no overlap in time-domain resources. This embodiment does not impose any limitations.

The uplink transmission may be an uplink data channel, uplink control channel, or uplink signal configured by semi-static signaling, or an uplink data channel, uplink control channel, or uplink signal scheduled or indicated by DCI. In this embodiment, assume the uplink transmission is an uplink transmission scheduled or triggered by DCI, including dynamically scheduled PUSCH, Type-2 CG PUSCH, PUCCH, etc.

As a specific example, the embodiment of the present disclosure imposes no limitations on the time-domain resource location occupied by the SSB transmission, the transmission configuration of the uplink transmission, or the overlapping condition of the SSB and uplink transmission in the time domain.

In this embodiment, when the network device 102 transmits an SSB and schedules an uplink transmission within a UL subband in the same SBFD slot, the terminal 101 and the network device 102 determine how to transmit and receive the uplink transmission according to a predefined rule.

Specifically, the terminal 101 transmits the uplink transmission within the UL subband according to scheduling information carried in the DCI. The uplink transmission includes at least one of the following uplink channels or signals: a PUSCH scheduled by DCI, a Type-2 CG PUSCH triggered by DCI, a PUCCH transmission corresponding to a PDSCH scheduled by DCI, an SRS triggered by DCI, a periodically transmitted PUSCH configured by an RRC signaling, or a periodically transmitted PUCCH configured by an RRC signaling, etc. In this embodiment, there is no restriction on whether repetition is enabled for the uplink transmission.

Embodiment 2: As described in Embodiment 1, in the embodiment of the present disclosure, assume repetition is enabled for the uplink transmission.

In the embodiment of the present disclosure, the terminal 101 transmits a first repetition within the UL subband according to scheduling or indication information from the network device 102. If other repetitions conflict with the SSB in the time domain, the terminal does not expect to transmit the uplink transmission.

Embodiment 3: For semi-statically configured uplink transmissions, including Type-1 CG PUSCH, periodic PUCCH, and periodic SRS, when they conflict with an SSB in the time domain, the terminal 101 does not expect to transmit the uplink transmission on the OFDM symbols that conflict with the SSB.

Embodiment 4: As described in the method of Embodiment 1, in this embodiment of the present disclosure, assume the uplink transmission transmitted within the UL subband includes PUSCH, PUCCH, and SRS.

In this embodiment, the network device 102 and the terminal 101 determine whether uplink transmission can be received and transmitted within the UL subband on OFDM symbols that have a time-domain conflict with the SSB according to the following method.

The terminal 101 determines whether an uplink transmission can be sent within a UL subband on an SSB symbol based on a frequency-domain distance between the UL subband and the SSB.

Correspondingly, the network device 102 determines whether an uplink transmission can be received within the UL subband on the SSB symbol based on a frequency-domain distance between the UL subband and the SSB.

The GAP is a guard band configured by the network device 102, a multiple of a guard band, a GAP indicated by the network device 102, or a GAP predefined by the protocol. This patent imposes no limitation.

Furthermore, when the GAP is a guard band, the terminal 101 transmits uplink within the UL subband that has a time-domain conflict with the SSB according to scheduling information or configuration information from the network device 102 only when the GAP is non-zero, i.e., when the GAP exists.

When the GAP is configured by the network device 102, the network device 102 configures it via a UE-dedicated signaling or a cell-specific signaling, for example, via an RRC signaling or SIB1. This patent imposes no limitation.

Embodiment 4: As described in the method of Embodiment 1, in this embodiment, assume the uplink transmission transmitted within the UL subband includes PUSCH, PUCCH, and SRS.

In the embodiment of the present disclosure, the terminal 101 determines whether an uplink transmission can be sent within the UL subband on the SSB symbol based on indication signaling from the network device 102. The indication signaling is indicated via DCI, RRC signaling, or SIB1. This patent imposes no limitation.

The indication signaling is a valid pattern indicating whether UL subbands that have time-domain conflicts with SSB occasions within an SSB burst set can be used for uplink transmission. The valid pattern is a bitmap. In the bitmap, each bit position: 1 indicates that within the UL subband on the corresponding SSB symbol, the terminal 101 can transmit uplink according to configuration or scheduling by the network device 102; 0 indicates that within the UL subband on the corresponding SSB symbol, the terminal 101 does not expect to transmit uplink.

In the above embodiments, the issue of time-domain conflict between the SSB sent by the network device and the uplink transmission of the terminal on the uplink subband can be resolved, the terminal behavior is clarified, and the availability and reliability of full-duplex communication are improved.

Embodiments of the present disclosure further provide an apparatus for implementing any of the above methods, for example, an apparatus including units or modules for implementing the steps performed by the terminal in any of the above methods. For another example, another apparatus is further provided, which includes units or modules to realize the steps performed by network devices (such as access network devices) in any of the above methods.

It should be understood that the division of each unit or module in the above apparatus is only a division of logical functions, which can be fully or partially integrated into a physical entity or physically separated in actual implementation. In addition, the units or modules in the apparatus can be realized in the form of calling software by a processor: for example, the apparatus includes a processor, which is connected with a memory, and instructions stored in the memory are stored, and the processor calls the instructions stored in the memory to realize any of the above methods or realize the functions of the units or modules of the apparatus. The processor is a general-purpose processor, such as a Central Processing Unit (CPU) or a microprocessor, and the memory is a memory in the apparatus or a memory outside the apparatus. Or, the units or modules in the apparatus can be realized in the form of hardware circuits, and some or all of the functions of the units or modules can be realized by designing the hardware circuits, which can be understood as one or more processors; For example, in an implementation, the above-mentioned hardware circuit is an application-specific integrated circuit (ASIC), and some or all of the functions of the above-mentioned units or modules are realized by designing logical relationship of elements in the circuit. For another example, in another implementation, the above hardware circuit can be realized by a programmable logic device (PLD). Take a Field Programmable Gate Array (FPGA) as an example, it can include a large number of logic gates, and the connection relationship between the logic gates is configured by configuration files, so as to realize the functions of some or all of the above units or modules. All units or modules of the above apparatus can be realized in the form of processor calling software, or in the form of hardware circuit, or in the form of processor calling software, and the rest in the form of hardware circuit.

In the embodiments of the present disclosure, the processor is a circuit with signal processing capability. In an implementation, the processor can be a circuit with instruction reading and running capability, such as a Central Processing Unit (CPU), a microprocessor, a graphics processing unit (GPU), or a digital signal processor (DSP). In another implementation, the processor can realize certain functions through the logical relationship of hardware circuits, which are fixed or reconfigurable. For example, the processor is a hardware circuit realized by an application-specific integrated circuit (ASIC) or a programmable logic device (PLD), such as an FPGA. In reconfigurable hardware circuits, the process of the processor loading the configuration document and configuring the hardware circuit can be understood as the processor loading instructions to implement the functions of some or all of the aforementioned units or modules. In addition, it can also refer to hardware circuits designed for artificial intelligence, which can be understood as ASICs, such as Neural Network Processing Units (NPUs), Tensor Processing Units (TPUs), and Deep Learning Processing Units (DPUs).

FIG. 5A is a schematic structural diagram of a terminal according to an embodiment of the present disclosure. As shown in FIG. 5A, a terminal 5100 may include: a processing module 5101.

In some embodiments, the processing module 5101 is configured to, in response to determining that a first time-domain resource occupied by a synchronization signal/physical broadcast channel block (SSB) conflicts with a second time-domain resource occupied by an uplink transmission of a terminal on an uplink subband, determine an uplink transmission behavior based on a predefined rule or a received indication signaling, where the uplink subband is located in a downlink time unit or a flexible time unit in time domain.

In some embodiments, the terminal 5100 may include a transceiver module 5102 (not shown in FIG. 5A), and the transceiver module 5102 is configured to receive indication signaling sent by a network device.

In some examples, the processing module 5101 is configured to perform at least one of other steps (e.g., step S2102, but not limited thereto) executed by the terminal 101 in any of the above methods, which will not be repeated here.

In some examples, the transceiver module 5102 is configured to perform at least one of communication steps (e.g., step S2101, but not limited thereto) involving transmission and/or reception executed by the terminal 101 in any of the above methods, which will not be repeated here.

FIG. 5B is a schematic structural diagram of a network device according to an embodiment of the present disclosure. As shown in FIG. 5B, a network device 5200 may include: a processing module 5201.

In some embodiments, the processing module 5201 is configured to, a processing module, configured to, in response to determining that a first time-domain resource occupied by a synchronization signal/physical broadcast channel block (SSB) conflicts with a second time-domain resource occupied by an uplink transmission of a terminal on an uplink subband, determine an uplink transmission behavior of the terminal based on a predefined rule or an indication signaling sent to the terminal, where the uplink subband is located in a downlink time unit or a flexible time unit in time domain.

In some embodiments, the network device 5200 may include a transceiver module 5202 (not shown in FIG. 5B), and the transceiver module 5202 is configured to send indication signaling to a terminal.

In some examples, the processing module 5201 is configured to perform at least one of other steps (e.g., step S2103, but not limited thereto) executable by the network device 5200 in any of the above methods, which will not be repeated here.

In some examples, the transceiver module 5202 is configured to perform at least one of communication steps (e.g., step S2101, but not limited thereto) involving transmission and/or reception executable by the network device 5200 in any of the above methods, which will not be repeated here.

In some embodiments, a transceiver module may include a sending module and/or a receiving module. The sending module and the receiving module may be separate or integrated together. In some examples, a transceiver module may be interchangeable with a transceiver.

In some embodiments, a processing module may be a single module or may include multiple sub-modules. In some examples, the multiple sub-modules respectively perform all or part of the steps required to be executed by the processing module. In some examples, a processing module may be interchangeable with a processor.

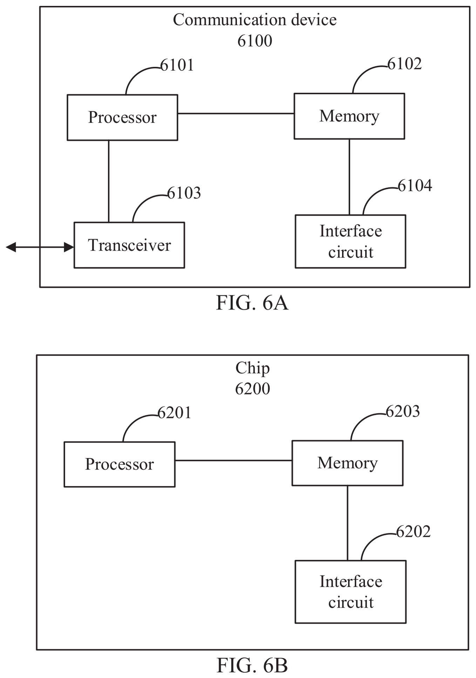

FIG. 6A is a schematic structural diagram of a communication device 6100 according to an embodiment of the present disclosure. The communication device 6100 may be a network device (e.g., an access network device, etc.), a terminal (e.g., user equipment, etc.), a chip, chip system, or processor that enables a core network device to implement any of the methods described above, or a chip, chip system, or processor that enables a terminal to implement any of the methods described above. The communication device 6100 can be used to implement the methods described in the aforementioned method embodiments. For details, refer to the descriptions in the aforementioned method embodiments.

As shown in FIG. 6A, the communication device 6100 includes one or more processors 6101. The processor(s) 6101 may be a general-purpose processor or a special-purpose processor, such as a baseband processor or a central processing unit (CPU). The baseband processor may be used to process communication protocols and communication data, and the CPU may be used to control the communication apparatus (e.g., a base station, baseband chip, terminal device, terminal device chip, DU, or CU, etc.), execute programs, and process program data. The communication device 6100 is configured to execute any of the methods described above.

In some embodiments, the communication device 6100 further includes one or more memories 6102 for storing instructions. In some examples, all or part of the memory 6102 may also be located outside the communication device 6100.

In some embodiments, the communication device 6100 further includes one or more transceivers 6103. When the communication device 6100 includes one or more transceivers 6103, the transceiver(s) 6103 perform at least one of the communication steps involving transmission and/or reception (e.g., step S2101, but not limited thereto) in the methods described above, and the processor(s) 6101 perform at least one of other steps (e.g., steps S2102, S2103, but not limited thereto).

In some embodiments, a transceiver may include a receiver and/or a transmitter. The receiver and transmitter may be separate or integrated together. In some examples, terms such as transceiver, transceiver unit, transceiver circuit, etc., may be used interchangeably. Similarly, terms such as transmitter, transmission unit, transmission circuit, etc., may be used interchangeably, and terms such as receiver, reception unit, reception circuit, etc., may be used interchangeably.

In some embodiments, the communication device 6100 may include one or more interface circuits 6104. In some examples, the interface circuit(s) 6104 are connected to the memory 6102. The interface circuit(s) 6104 may be configured to receive signals from the memory 6102 or other apparatuses and may be configured to send signals to the memory 6102 or other apparatuses. For example, the interface circuit(s) 6104 may read instructions stored in the memory 6102 and send the instructions to the processor(s) 6101.

The communication device 6100 described in the above embodiments may be a network device or a terminal. However, the scope of the communication device 6100 described in the present disclosure is not limited thereto, and the structure of the communication device 6100 is not restricted by FIG. 6A. The communication device may be an independent device or part of a larger device. For example, the communication device may be: 1) an independent integrated circuit (IC), chip, chip system, or subsystem; 2) a set including one or more ICs, In some examples, the IC set may also include storage components for storing data and programs; 3) an application-specific integrated circuit (ASIC), such as a modem; 4) a module embeddable in other devices; 5) a receiver, terminal device, smart terminal device, cellular phone, wireless device, handset, mobile unit, in-vehicle device, network device, cloud device, artificial intelligence device, etc.; 6) others, etc.

FIG. 6B is a schematic structural diagram of a chip 6200 according to an embodiment of the present disclosure. For cases where the communication device is a chip or chip system, refer to the schematic structural diagram of the chip 6200 shown in FIG. 6B, but it is not limited thereto.

The chip 6200 includes one or more processors 6201. The chip 6200 is configured to execute any of the methods described above.

In some embodiments, the chip 6200 further includes one or more interface circuits 6202. In some examples, the interface circuit(s) 6202 are connected to a memory 6203. The interface circuit(s) 6202 may be configured to receive signals from the memory 6203 or other apparatuses and may be configured to send signals to the memory 6203 or other apparatuses. For example, the interface circuit(s) 6202 may read instructions stored in the memory 6203 and send the instructions to the processor(s) 6201.

In some embodiments, the interface circuit(s) 6202 perform at least one of the communication steps involving transmission and/or reception (e.g., step S2101, but not limited thereto) in the methods described above, and the processor(s) 6201 perform at least one of other steps (e.g., steps S2102, S2103, but not limited thereto).

In some embodiments, terms such as interface circuit, interface, transceiver pin, transceiver, etc., may be used interchangeably.

In some embodiments, the chip 6200 further includes one or more memories 6203 for storing instructions. In some examples, all or part of the memory 6203 may be located outside the chip 6200.

The present disclosure further provides a storage medium. The storage medium stores instructions which, when executed on the communication device 6100, cause the communication device 6100 to execute any of the methods described above. In some examples, the storage medium is an electronic storage medium. In some examples, the storage medium is a computer-readable storage medium, but is not limited thereto, and it may also be a storage medium readable by other devices. In some examples, the storage medium may be a non-transitory storage medium, but is not limited thereto, and it may also be a transitory storage medium.

The present disclosure also provides a program product. When executed by the communication device 6100, the program product causes the communication device 6100 to execute any of the methods described above. In some examples, the program product is a computer program product.

The present disclosure also provides a computer program. When executed on a computer, the computer program causes the computer to execute any of the methods described above.

Other embodiments of the present disclosure will easily occur to those skilled in the art after considering the specification and practicing the present disclosure disclosed herein. The present disclosure is intended to cover any variations, uses or adaptations of the present disclosure, and these variations, uses or adaptations follow general principles of the present disclosure and include common sense or common technical means in the technical field that are not disclosed in the present disclosure. The specification and embodiments are to be regarded as exemplary only, and true scope and spirit of the present disclosure are indicated by the following claims.

It should be understood that the present disclosure is not limited to precise structures described above and shown in the accompanying drawings, and various modifications and changes can be made without departing from its scope. The scope of the present disclosure is limited only by the appended claims.

## Claims

1. A method for determining an uplink transmission behavior, comprising:
in response to determining that a first time-domain resource occupied by a synchronization signal/physical broadcast channel block (SSB) conflicts with a second time-domain resource occupied by an uplink transmission of a terminal on an uplink subband, determining an uplink transmission behavior based on a predefined rule or a received indication signaling,
wherein the uplink subband is located in a downlink time unit or a flexible time unit in time domain.

2. The method according to claim 1, wherein determining the uplink transmission behavior based on the received indication signaling comprises:
determining, based on received downlink control information (DCI), to perform the uplink transmission on the uplink subband.

3. The method according to claim 2, wherein determining, based on the received downlink control information (DCI), to perform the uplink transmission on the uplink subband comprises:
in response to that a repetition of transmission via a physical uplink channel is enabled, determining, based on the DCI, to perform a first number of repetitions of the transmission via the physical uplink channel on the uplink subband,
wherein the first number is less than a total number of repetitions.

4. The method according to claim 3, further comprising:
determining, based on the predefined rule or a received new indication signaling, a new uplink transmission behavior,
wherein the new uplink transmission behavior comprises whether to perform a second number of repetitions of the transmission via the physical uplink channel on the uplink subband, and the second number is equal to a difference between the total number and the first number.

5. The method according to claim 1, wherein the indication signaling indicates any one of:
whether a time unit where the SSB is located is allowed to be used for performing the uplink transmission; or
whether each SSB occasion comprised in an SSB burst set is allowed to be used for performing the uplink transmission.

6. The method according to claim 5, wherein determining the uplink transmission behavior based on the received indication signaling comprises any one of:
performing, based on the indication signaling, the uplink transmission on the uplink subband in a first time unit, wherein the first time unit is a time unit where the SSB is located and is allowed to be used for performing the uplink transmission; or
performing, based on the indication signaling, the uplink transmission on the uplink subband in a first SSB occasion, wherein the first SSB occasion is an SSB occasion that is allowed to be used for performing the uplink transmission.

7. The method according to claim 1, wherein determining the uplink transmission behavior based on the predefined rule comprises:
determining a first number of resource blocks (RBs) spaced between a first frequency-domain resource and a second frequency-domain resource; and
in response to determining that the first number of RBs is a positive integer multiple of a second number of RBs, determining to perform the uplink transmission on the uplink subband.

8. The method according to claim 7, wherein the second RB number is any one of:
a number of RBs comprised in a guard band; or
a number of RBs comprised in a first gap, wherein the first gap is a frequency-domain gap configured by a network device or predefined by a protocol.

9. The method according to any one of claims 1-8, wherein the uplink transmission is used for transmitting at least one of:
a physical uplink shared channel (PUSCH) scheduled by downlink control information (DCI);
a Configured Grant PUSCH triggered by DCI;
a physical uplink control channel (PUCCH) corresponding to a physical downlink shared channel (PDSCH) scheduled by DCI;
an uplink reference signal triggered by DCI;
a periodically transmitted PUSCH configured by a radio resource control (RRC) signaling; or
a periodically transmitted PUCCH configured by an RRC signaling.

10. A method for determining an uplink transmission behavior, comprising:
in response to determining that a first time-domain resource occupied by a synchronization signal/physical broadcast channel block (SSB) conflicts with a second time-domain resource occupied by an uplink transmission of a terminal on an uplink subband, determining an uplink transmission behavior of the terminal based on a predefined rule or an indication signaling sent to the terminal, wherein the uplink subband is located in a downlink time unit or a flexible time unit in time domain.

11. The method according to claim 10, wherein determining the uplink transmission behavior of the terminal based on the indication signaling sent to the terminal comprises:
determining, based on downlink control information (DCI) sent to the terminal, that the terminal performs the uplink transmission on the uplink subband.

12. The method according to claim 11, wherein determining, based on the downlink control information (DCI) sent to the terminal, that the terminal performs the uplink transmission on the uplink subband comprises:
in response to that a repetition of transmission via a physical uplink channel is enabled, determining, based on the DCI, that the terminal performs a first number of repetitions of the transmission via the physical uplink channel on the uplink subband, wherein the first number is less than a total number of repetitions.

13. The method according to claim 12, further comprising:
determining, based on a predefined rule or a new indication signaling sent to the terminal, a new uplink transmission behavior of the terminal,
wherein the new uplink transmission behavior comprises whether to perform a second number of repetitions of the transmission via the physical uplink channel on the uplink subband, and the second number is equal to a difference between the total number and the first number.

14. The method according to claim 11, wherein the indication signaling indicates any one of:
whether a time unit where the SSB is located is allowed to be used for performing the uplink transmission; or
whether each SSB occasion comprised in an SSB burst set is allowed to be used for performing the uplink transmission.

15. The method according to claim 14, wherein determining the uplink transmission behavior of the terminal based on the indication signaling sent to the terminal comprises any one of:
determining, based on the indication signaling, that the terminal performs the uplink transmission on the uplink subband in a first time unit, wherein the first time unit is a time unit where the SSB is located and is allowed to be used for performing the uplink transmission; or
determining, based on the indication signaling, that the terminal performs the uplink transmission on the uplink subband in a first SSB occasion, wherein the first SSB occasion is an SSB occasion that is allowed to be used for performing the uplink transmission.

16. The method according to claim 11, wherein determining the uplink transmission behavior of the terminal based on the predefined rule of the terminal comprises:
determining a first number of resource blocks (RBs) spaced between a first frequency-domain resource and a second frequency-domain resource; and
in response to determining that the first number of RBs is a positive integer multiple of a second number of RBs, determining that the terminal performs the uplink transmission on the uplink subband.

17. The method according to claim 16, wherein the second RB number is any one of:
a number of RBs comprised in a guard band; or
a number of RBs comprised in a first gap, wherein the first gap is a frequency-domain gap configured by a network device or predefined by a protocol.

18. The method according to any one of claims 10-17, wherein the uplink transmission is used for transmitting at least one of:
a physical uplink shared channel (PUSCH) scheduled by downlink control information (DCI);
a Configured Grant PUSCH triggered by DCI;
a physical uplink control channel (PUCCH) corresponding to a physical downlink shared channel (PDSCH) scheduled by DCI;
an uplink reference signal triggered by DCI;
a periodically transmitted PUSCH configured by a radio resource control (RRC) signaling; or
a periodically transmitted PUCCH configured by an RRC signaling.

19. A terminal, comprising:
a processing module, configured to, in response to determining that a first time-domain resource occupied by a synchronization signal/physical broadcast channel block (SSB) conflicts with a second time-domain resource occupied by an uplink transmission of a terminal on an uplink subband, determine an uplink transmission behavior based on a predefined rule or a received indication signaling, wherein the uplink subband is located in a downlink time unit or a flexible time unit in time domain.

20. A network device, comprising:
a processing module, configured to, in response to determining that a first time-domain resource occupied by a synchronization signal/physical broadcast channel block (SSB) conflicts with a second time-domain resource occupied by an uplink transmission of a terminal on an uplink subband, determine an uplink transmission behavior of the terminal based on a predefined rule or an indication signaling sent to the terminal, wherein the uplink subband is located in a downlink time unit or a flexible time unit in time domain.

21. A terminal, comprising:
one or more processors;
wherein the terminal is configured to execute the method for determining an uplink transmission behavior according to any one of claims 1-9.

22. A network device, comprising:
one or more processors;
wherein the network device is configured to execute the method for determining an uplink transmission behavior according to any one of claims 10-18.

23. A communication system, comprising: a terminal and a network device, wherein the terminal is configured to implement the method for determining an uplink transmission behavior according to any one of claims 1-9, and the network device is configured to implement the method for determining an uplink transmission behavior according to any one of claims 10-18.

24. A storage medium storing instructions, wherein when the instructions are executed on a communication device, cause the communication device to perform the method for determining an uplink transmission behavior according to any one of claims 1-9 or 10-18.
